## Europäisches Patentamt

## European Patent Office

## Office européen des brevets

(11) Veröffentlichungsnummer: **0 235 362**
**B1**

(12) # EUROPÄISCHE PATENTSCHRIFT

(45) Veröffentlichungstag der Patentschrift:
05.09.90

(51) Int. Cl.⁵: **G01P 5/12**, G01F 1/68,
G01P 5/10

(21) Anmeldenummer: **86115677.6**

(22) Anmeldetag: **12.11.86**

(54) Anordnung zur Messung der Strömungsgeschwindigkeit.

(30) Priorität: **03.03.86 DE 3606849**

(43) Veröffentlichungstag der Anmeldung:
**09.09.87 Patentblatt 87/37**

(45) Bekanntmachung des Hinweises auf die Patenterteilung:
**05.09.90 Patentblatt 90/36**

(84) Benannte Vertragsstaaten:
**DE FR GB IT SE**

(56) Entgegenhaltungen:
**EP-A- 0 048 359**
**DE-A- 3 516 794**
**GB-A- 2 040 471**
**GB-A- 2 108 133**
**GB-A- 2 134 266**
**US-A- 3 991 613**

(73) Patentinhaber: **VDO Adolf Schindling AG,
Gräfstrasse 103, D-6000 Frankfurt/Main 90(DE)**

(72) Erfinder: **Weibler, Wolfgang, Dr., Vor der Heide 14,
D-6238 Hofheim a. T.(DE)**

(74) Vertreter: **Klein, Thomas, Dipl.-Ing. (FH), Sodener
Strasse 9 Postfach 6140, D-6231 Schwalbach a. Ts.(DE)**

ACTORUM AG

## Beschreibung

Die Erfindung betrifft eine Anordung zur Messung der Strömungsgeschwindigkeit von Medien, insbesondere der Ansaugluft von Brennkraftmaschinen, mit einer elektrisch beheizbaren widerstandsschicht, welche isoliert auf einem Träger aufgebracht ist und mit dem strömenden Medium in Wärmekontakt steht, wobei wenigstens partiell eine Schicht niedriger Wärmeleitfähigkeit aufgebracht ist.

Bei bekannten Sensorelementen für elektro-thermische Luftmassenmesser wird eine Widerstandsschicht, welche auf einem plattenförmigen Träger aufgebracht ist, von einem Strom durchflossen, der eine Erwärmung zur Folge hat. Je nach Strömungsgeschwindigkeit der den Sensor umströmenden Luft, wird der Widerstandsschicht und dem Träger mehr oder weniger Wärme entzogen. Durch Verwendung eines Widerstandsmaterials mit positivem oder negativem Temperaturkoeffizienten kann der Strom derart geregelt werden, daß eine konstante Übertemperatur gegenüber der Luft erzielt wird. Der dazu benötigte Strom ist dann ein Maß für die Strömungsgeschwindigkeit.

Ein wichtiges Anwendungsgebiet derartiger Sensoren ist die Messung der von Brennkraftmaschinen angesaugten Luftmasse. Diese Messung ist insbesondere wichtig, um den Verbrennungsvorgang der Brennkraftmaschine im Sinne einer Minimierung der Schadstoffanteile bei der Verbrennung zu steuern.

Eine Vorrichtung für diesen Zweck, bei der der wenigstens eine beheizte Widerstand die Form einer Platte hat, die parallel zur Strömung ausgerichtet ist, ist aus der Druckschrift EP-A 048 359 bekannt. Dort sind eine oder mehrere Schmalseiten, insbesondere die der Strömung entgegengerichtete, mit einer Schutzschicht bedeckt, die gemäß einer Ausführungsform wärmeisolierend wirken soll. Auf diese Weise soll der zu beobachtenden Drift der Eichcharakteristik infolge zunehmender Ablagerung von Schmutzpartikeln entgegengewirkt werden.

Es hat sich jedoch herausgestellt, daß die örtliche Wärmeübergangszahl in der Nähe derjenigen Kante des Sensors, welche der Luftströmung entgegensteht am größten ist und mit zunehmender Entfernung von dieser Kante abnimmt. Dadurch entsteht in Strömungsrichtung ein Temperaturgradient längs der Widerstandsschicht und des Trägers, der von der Strömungsgeschwindigkeit abhängig ist und eine relativ große Ansprechzeit der bekannten Sensoren bedingt.

Zur Verringerung der Ansprechzeit ist es bereits bekannt geworden, die in der Widerstandsschicht erzeugten Stromlaufbahnen so zu dimensionieren, daß die resultierende elektrische Heizleistung pro Flächeneinheit in einem konstanten Verhältnis zur örtlichen Wärmeübergangszahl steht.

Die erfindungsgemäße Anordnung ist dadurch gekennzeichnet, daß ferner eine Schicht mit niedriger Wärmeleitfähigkeit derart aufgebracht ist, daß die örtliche Würmeübergangszahl zwischen dem strömenden Medium einerseits und der Widerstandsschicht und dem Träger andererseits in Strömungsrichtung mindestens angenähert konstant ist. Die Erfindung hat den Vorteil, daß die Struktur der Widerstandsschicht nicht nach den obenerwähnten Gesichtspunkten auszulegen ist und daß die Widerstandsschicht durch die Schicht mit niedriger Wärmeleitfähigkeit geschützt ist. Ferner ist der Sensor gegenüber Schmutzablagerungen unempfindlich.

Ausgestaltungen der erfindungsgemäßen Anordnung sind dadurch gekennzeichnet, daß die Stärke der Schicht in Strömungsrichtung kontinuierlich oder stufenweise abnimmt. Diese Ausgestaltungen der Erfindung haben sich als besonders fertigungsgerecht erwiesen und können somit preiswert hergestellt werden.

Eine Herstellung der Anordnung mit stufenweise abnehmender Schichtstärke ist in vorteilhafter Weise dadurch möglich, daß die Schicht durch ein Druckverfahren aufgebracht wird und daß mehrere Teilschichten übereinander gedruckt werden, wobei die Anzahl der Teilschichten in Strömungsrichtung abnimmt.

Anordnungen mit kontinuierlicher aber auch mit stufenweiser Abnahme der Schichtstärke können auch dadurch hergestellt werden, daß ein chemisches oder physikalisches auftragendes Verfahren angewendet wird und daß der Träger und eine die Oberfläche der Widerstandsschicht mindestens teilweise bedeckende Maske während des Auftragens der Schicht derart relativ zueinander bewegt werden, daß Teilbereiche der Oberfläche verschieden lang zum Auftragen der Schicht freigegeben werden. Dabei kann das auftragende Verfahren je nach benötigtem Material ein Aufdampf-Verfahren sein, das entweder bei Atmosphärendruck, unter Schutzgas oder im Vakuum durchgeführt wird.

Die ortsabhängige Schichtstärke kann auch dadurch erreicht werden, daß die Maske einen quer zur Bewegungsrichtung verlaufenden Schlitz aufweist und daß die Maske und der Träger mit einer an der jeweiligen gewünschten Schichtstärke abhängigen Geschwindigkeit relativ zueinander bewegt werden oder daß die Maske mit im wesentlichen konstanter Geschwindigkeit bewegt wird und daß die Oberfläche während des Auftragens in zunehmendem Maße freigegeben wird.

Die Schicht mit niedriger Wärmeleitfähigkeit kann auch durch Ziehen aus einer Schmelze hergestellt werden, wobei der Träger mit der bereits aufgebrachten Widerstandsschicht senkrecht derart in die Schmelze eingetaucht wird, daß diejenige Kante, welche bei der späteren Verwendung der Anordnung der Strömung entgegengerichtet ist, nach unten zeigt.

Geeignete Werkstoffe für die Schicht mit niedriger Wärmeleitfähigkeit sind Glas und Kunststoffe, insbesondere Polytetrafluoräthen und Polyimide. Der Träger kann aus Silizium, passiviertem Metall oder Keramik bestehen.

Die Erfindung läßt zahlreiche Ausführungsformen zu. Zwei davon sind schematisch in der Zeichnung an Hand mehrerer Figuren dargestellt und nachfolgend beschrieben.

Es zeigt:

Fig. 1 ein erstes Ausführungsbeispiel als Ansicht und Querschnitt,

Fig. 2 ein zweites Ausführungsbeispiel, ebenfalls als Ansicht und als Querschnitt und

Fig. 3 und Fig. 4 schematische Darstellungen zweier bei der Herstellung von erfindungsgemäßen Anordnungen benutzbaren Vorrichtungen.

Gleiche Teile sind in den Figuren mit gleichen Bezugszeichen versehen.

In den Figuren sind die erfindungsgemäßen Anordnungen vergrößert dargestellt. Im allgemeinen liegen die Abmessungen derartiger Sensoren im Bereich zwischen etwa 5 und 20 mm.

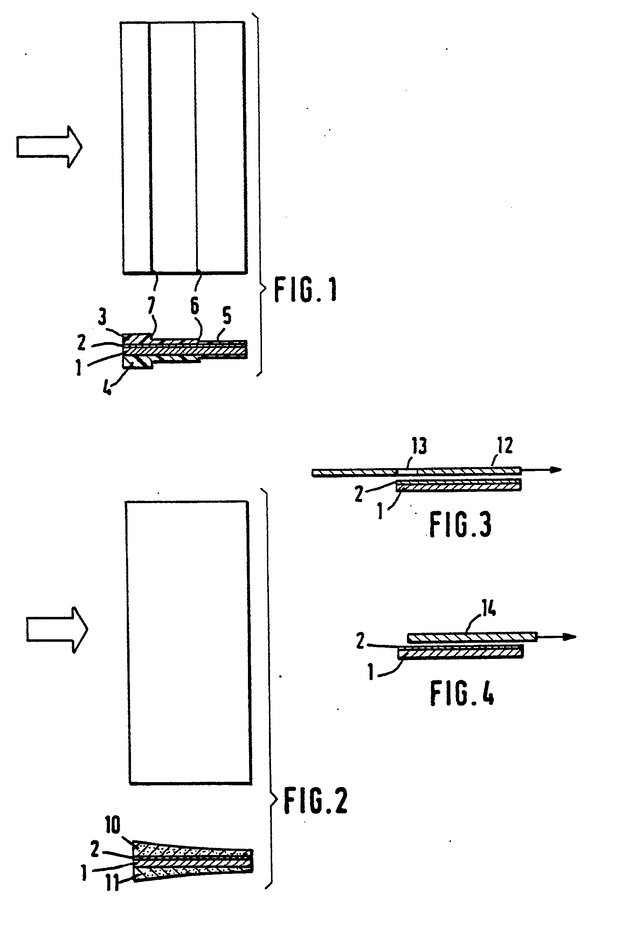

Die Anordnung nach Fig. 1 weist einen plattenförmigen Träger 1 auf, welcher in an sich bekannter Weise aus einem keramischen Material, beispielsweise Aluminiumoxid oder Berilliumoxid bestehen kann. Es ist jedoch in vorteilhafter Weise auch die Verwendung von Silizium möglich, wobei für die Herstellung des Trägers 1 als auch für die Aufbringung der weiteren Schichten die für die Herstellung elektronischer Bauelemente entwickelten Verfahren zur Verfügung stehen. Auch die Verwendung eines Trägers 1 aus Metall kann vorteilhaft sein, wobei jedoch die zur Widerstandsschicht gerichtete Oberfläche des Trägers 1 zu passivieren ist.

Auf den Träger 1 ist eine Widerstandsschicht 2 aufgebracht, welche in an sich bekannter Weise aus einem Material mit temperaturabhängiger elektrischer Leitfähigkeit besteht. Weitere Einzelheiten der Widerstandsschicht sind zum Verständnis der vorliegenden Erfindung nicht notwendig und daher auch nicht näher erläutert.

Auf die Widerstandsschicht 2 sowie auf die ihr gegenüberliegende Oberfläche des Trägers 1 ist jeweils eine Schicht mit niedriger Wärmeleitfähigkeit aufgebracht. Dabei ist die Stärke der Schichten 3, 4 jeweils an der dem Luftstrom zugewandten Kante der Anordnung am größten und nimmt stufenweise in Richtung des Luftstromes ab. Bei der Anordnung nach Fig. 1 erfolgt dieses in mehreren Stufen. Eine derartige Schicht läßt sich beispielsweise dadurch aufbringen, daß mit Hilfe eines Druckverfahrens zunächst eine Schicht von der Stärke, wie sie bei 5 dargestellt ist, aufgebracht wird. Auf diese wird eine weitere Schicht aufgedruckt, welche jedoch nur bis zu der mit 6 bezeichneten Linie reicht, und danach eine Schicht, die bis zur Linie 7 reicht.

Fig. 2 zeigt eine Anordnung mit kontinuierlich verlaufender Stärke der Schichten 10 und 11. Eine derartige Schicht kann beispielsweise dadurch hergestellt werden, daß beim Aufdampfen des Schichtmaterials eine der in den Figuren 3 und 4 gezeigten Maske 12 über die Oberfläche der Widerstandsschicht 2 bzw. des Trägers 1 bewegt wird. Dabei kann gemäß Fig. 3 die Maske 12 einen Schlitz 13 aufweisen. Die verschiedene Schichtstärke wird in diesem Fall mit unterschiedlicher Geschwindigkeit der in Pfeilrichtung gegenüber dem Träger bewegten Maske 12 erzielt.

Bei der in Fig. 4 angedeuteten Vorrichtung wird eine Maske in Pfeilrichtung während des Aufdampfvorganges bewegt, so daß sie die Oberfläche während des Auftragens in zunehmendem Maße freigibt. Anstelle einer Bewegung der Maske kann auch der Träger bewegt werden, was gegebenenfalls bei einer Fließbandfertigung Vorteile bedeutet.

## Patentansprüche

1. Anordnung zur Messung der Strömungsgeschwindigkeit von Medien, insbesondere der Ansaugluft von Brennkraftmaschinen, mit einer elektrisch beheizbaren Widerstandsschicht, welche isoliert auf einen Träger aufgebracht ist und mit dem strömenden Medium in Wärmekontakt steht, wobei wenigstens partiell eine Schicht niedriger Wärmeleitfähigkeit aufgebracht ist, dadurch gekennzeichnet, daß die Schicht niedriger Wärmeleitfähigkeit auf der Widerstandsschicht und auf dem Träger derart aufgebracht ist, daß sie diese gegenüber dem Medium völlig abdeckt und die örtliche Wärmeübergangszahl zwischen dem strömenden Medium einerseits und der Widerstandsschicht und dem Träger andererseits in Strömungsrichtung mindestens angenähert konstant ist.

2. Anordnung nach Anspruch 1, dadurch gekennzeichnet, daß die Stärke der Schicht in Strömungsrichtung kontinuierlich abnimmt.

3. Anordnung nach Anspruch 1, dadurch gekennzeichnet, daß die Stärke der Schicht in Strömungsrichtung stufenweise abnimmt.

4. Verfahren zur Herstellung von Anordnungen nach Anspruch 3, dadurch gekennzeichnet, daß die Schicht durch ein Druckverfahren aufgebracht wird und daß mehrere Teilschichten übereinander gedruckt werden, wobei die Anzahl der Teilschichten in Strömungsrichtung abnimmt.

5. Verfahren zur Herstellung von Anordnungen nach Anspruch 1 bis 3, dadurch gekennzeichnet, daß ein chemisches oder physikalisches auftragendes Verfahren angewendet wird und daß der Träger und eine die Oberfläche der Widerstandsschicht mindestens teilweise bedeckende Maske während des Auftragens der Schicht derart relativ zueinander bewegt werden, daß Teilbereiche der Oberfläche verschieden lang zum Auftragen der Schicht freigegeben werden.

6. Verfahren nach Anspruch 5, dadurch gekennzeichnet, daß die Maske einen quer zur Bewegungsrichtung laufenden Schlitz aufweist und daß die Bewegung mit einer von der jeweiligen gewünschten Schichtstärke abhängigen Geschwindigkeit erfolgt.

7. Verfahren nach Anspruch 5, dadurch gekennzeichnet, daß die Bewegung mit im wesentlichen konstanter Geschwindigkeit erfolgt und daß die Oberfläche während des Auftragens in zunehmendem Maße freigegeben wird.

8. Verfahren nach einem der Ansprüche 5 bis 7, dadurch gekennzeichnet, daß das auftragende Verfahren ein Aufdampf-Verfahren ist.

9. Verfahren zur Herstellung von Anordnungen nach einem der Ansprüche 1 bis 3, dadurch gekennzeichnet, daß die Schicht durch Ziehen aus einer Schmelze hergestellt wird, wobei der Träger mit der bereits aufgebrachten Widerstandsschicht senkrecht derart in die Schmelze eingetaucht wird, daß diejenige Kante, welche bei der späteren Verwendung der Anordnung der Strömung entgegen gerichtet ist, nach unten zeigt.

10. Anordnung nach Anspruch 1, <u>dadurch gekennzeichnet</u>, daß die Schicht mit niedriger Wärmeleitfähigkeit aus Glas besteht.

11. Anordnung nach Anspruch 1, <u>dadurch gekennzeichnet</u>, daß die Schicht mit niedriger Wärmeleitfähigkeit aus Kunststoff, vorzugsweise aus Polytetrafluoräthen oder Polyamid besteht.

12. Anordnung nach Anspruch 1, <u>dadurch gekennzeichnet</u>, daß der Träger aus Silizium besteht.

13. Anordnung nach Anspruch 1, <u>dadurch gekennzeichnet</u>, daß der Träger aus passiviertem Metall besteht.

14. Anordnung nach Anspruch 1, <u>dadurch gekennzeichnet</u>, daß der Träger aus Keramik besteht.

## Revendications

1. Dispositif pour la mesure de la vitesse d'écoulement de fluides, en particulier de l'air d'admission de moteurs à combustion interne, ce dispositif comportant une couche résistante susceptible d'être chauffée électriquement, qui est appliquée en étant isolée sur un support et qui est en contact thermique avec le fluide en cours d'écoulement, une couche ayant une plus faible conductibilité thermique étant appliquée au moins partiellement, dispositif caractérisé par le fait que la couche ayant une plus faible conductibilité thermique est appliquée sur la couche résistante et sur le support, de manière à les recouvrir complètement pour les séparer du fluide et de manière que le coefficient de conductibilité thermique entre, d'une part le fluide en cours d'écoulement et, d'autre part, la couche résistante et le support soit, au moins approximativement constant dans le sens de l'écoulement (du fluide).

2. Dispositif selon la revendication 1, caractérisé en ce que l'épaisseur de la couche diminue de façon continue dans le sens de l'écoulement (du fluide).

3. Dispositif selon la revendication 1, caractérisé en ce que l'épaisseur de la couche diminue par degrés dans le sens de l'écoulement (du fluide).

4. Procédé pour la fabrication de dispositifs selon la revendication 3, caractérisé en ce que la couche est déposée par un procédé d'impression et en ce que plusieurs couches partielles sont imprimées les unes sur les autres, le nombre des couches partielles diminuant dans le sens de l'écoulement (du fluide).

5. Procédé pour la fabrication de dispositifs selon la revendication 1 à 3, caractérisé en ce qu'on emploie un procédé de dépôt chimique ou physique et en ce que le support, et un masque recouvrant au moins partiellement la surface de la couche résistante, sont déplacés l'un par rapport à l'autre pendant le dépôt de la couche, de façon telle que des zones partielles de la surface sont dégagées sur des longueurs différentes en vue du dépôt de la couche. 6. Procédé selon la revendication 5, caractérisé en ce que le masque présente une fente s'étendant transversalement à la direction de déplacement et en ce que le déplacement s'effectue à une vitesse qui dépend de l'épaisseur de couche souhaitée.

7. Procédé selon la revendication 5, caractérisé en ce que le déplacement s'effectue à vitesse sensiblement constante et en ce que la surface est dégagée dans une mesure croissante pendant le dépôt.

8. Procédé selon une des revendications 5 à 7, caractérisé en ce que le procédé de dépôt est un procédé par vaporisation.

9. Procédé pour la fabrication de dispositifs selon une des revendications 1 à 3, caractérisé en ce que la couche est fabriquée par traction hors d'un bain fondu, le support comportant la couche résistante déjà appliquée étant plongé verticalement dans le bain fondu, de façon telle que le bord qui, au cours de l'utilisation ultérieure du dispositif est dirigé face à l'écoulement (du fluide), soit orienté vers le bas.

10. Dispositif selon la revendication 1, caractérisé en ce que la couche ayant une conductibilité thermique faible est constituée par du verre.

11. Dispositif selon la revendication 1, caractérisé en ce que la couche ayant une conductibilité thermique faible est constituée par une matière plastique, de préférence du polytétrafluoréthylène ou du polyamide.

12. Dispositif selon la revendication 1, caractérisé en ce que le support est constitué par du silicium.

13. Dispositif selon la revendication 1, caractérisé en ce que le support est constitué par un métal passivé.

14. Dispositif selon la revendication 1, caractérisé en ce que le support est constitué par de la matière céramique.

## Claims

1. Arrangement for measuring the flow velocity of media, in particular the intake air of internal combustion engines, comprising an electrically heatable resistive film which applied in an insulated manner to a substrate and is in thermal contact with the flowing medium, a film of low thermal conductivity at least being partly applied, characterized in that the film of low thermal conductivity applied to the resistive film and to the substrate such a way that it completely covers them from the medium, and the local heat-transfer coefficient between the flowing medium on the one hand and the resistive film and the substrate on the other hand is at least approximately constant in the flow direction.

2. Arrangement according to Claim 1, characterized in that the thickness of the film continuously decreases in the flow direction.

3. Arrangement according to Claim 1, characterized in that the thickness of the film decreases stepwise in the flow direction.

4. Process of manufacturing arrangements according to Claim 3, characterized in that the film is applied by a printing process, and in that a plurality of partial films are printed one above the other, the number of partial films decreasing in the flow direction.

5. Process of manufacturing arrangements according to Claims 1 to 3, characterized in that a chemically or physically depositing process is used, and in that the substrate and a mask at least partly covering the surface of the resistive film are moved relative to one another during the deposition of the film in such a way that partial areas of the surface of various lengths are uncovered for depositing the film.

6. Process according to Claim 5, characterized in that the mask has a slot running transversely to the direction of movement, and in that the movement takes place at a speed dependent upon the respective desired film thickness.

7. Process according to Claim 5, characterized in that the movement takes place at essentially constant speed, and in that the surface is uncovered to an increasing extent during the deposition.

8. Process according to one of claims 5 to 7, characterized in that the depositing process is a vapour deposition process.

9. Process of manufacturing arrangements according to one of Claims 1 to 3, characterized in that the film is produced by drawing from a melt, the substrate with the already applied resistive film being plunged perpendicularly into the melt in such a way that the edge which is directed against the flow during later use of the arrangement points downwards.

10. Arrangement according to Claim 1, characterized in that the film of low thermal conductivity is made of glass.

11. Arrangement according to Claim 1, characterized in that the film of low thermal conductivity is made of plastic, preferably of polytetrafluoroethylene or polyamide.

12. Arrangement according to Claim 1, characterized in that the substrate is made of silicon.

13. Arrangement according to Claim 1, characterized in that the substrate is made of passivated metal.

14. Arrangement according to Claim 1, characterized in that the substrate is made of ceramic.

FIG.1

3
2
1
7    6    5
4

FIG.3

13    12
2
1

FIG.4

14
2
1

FIG.2

10
2
1
11